# EUROPEAN PATENT APPLICATION

(11) **EP 1 266 739 A1**
(43) Date of publication of application: **18.12.2002**
(21) Application number: 02012778.3
(22) Date of filing: 10.06.2002
(51) Int. Cl.: B29B 7/88, C08J 3/00

(54) **Method and apparatus for introducing colorant or the like to resinous materials**

(30) Priority: 11.06.2001 US 296774 P
(71) Applicant: R & D Technology, Inc., Vicksburg, Mississipi 39182 (US)
(72) Inventor: Rouse, Michael W., Vicksburg, Mississippi 391820 (US); Deeb, Victor M., Marlborough, Massachusetts 01752 (US)
(74) Representative: Plate, Jürgen, Dr.

(57) **Abstract**

A method for predispersing additives, especially pigments and colorants used in a compounding process is described herein. The instant method comprises cogrinding an elastomer and a sufficient amount of a colorant to produce a colored particle. A particle comprising an elastomer which is in a mixture with a colorant is also described.

## Description

### BACKGROUND OF THE INVENTION

### 1. Field of the Invention

The present invention relates to methods for predispersing additives, especially pigments and colorants used in a compounding process. More particularly, the present invention relates to methods for dispersing colorants and/or opacifiers such as titanium dioxide into resinous materials for the production of rubber or plastic materials.

### 2. Description of the Related Art

Previously, it has often been difficult to impart colorant to resinous materials. For example, often colorants are masterbatched in a binder and subjected to intensive mixing in order to reduce particle size which is not an inexpensive process. The dispersion of the color concentrate in the final composition also requires intensive mixing in order to disperse the color concentrate in the final mix. The finer the dispersion, the less of the color concentrate is required. For example, in U.S. Patent No. 3,970,601 is disclosed that polymers may be colored by various methods. Dyeing and printing processes which employ soluble dyes are known, e.g. direct dyes for cellulose fibers, acid dyes for wool, basic dyes for polyacrylonitrile, and the like. Another method consists of dyeing and printing using pigments which are applied to the surface of materials, for example, in the form of dispersions, which diffuse into the article and dissolve therein. Direct incorporation of dyes into fiberous materials by spinning is also known. Dyeing and printing can also be carried out by pigment dyeing and pigment printing processes using binders. In these cases, the binder binds the pigment to the surface of the material that is to be colored.

It is also common to use color pigments which are generally insoluble in the polymers. Thus, for example, in polyurethane coating compounds it is preferred to use color pigments of either organic or inorganic origin. The color yield depends on the particle size of the color pigments. The larger the surface area of the pigments, that is to say the more finely divided the pigment, the greater is the color yield.

Since it is extremely difficult to obtain pigments of reproducible particle size by mechanical methods using bar looms and therefore more difficult to form patterns, it has become customary in some cases to work up the pigments in large batches and to control the particle size by coating the small particles of pigment with a coating resin. This prevents the finely divided pigments from reagglomerating. A disadvantage of this method is that when preparing the pigment paste the coating resin must always be compatible with the polymer with which the pigment is to be covered. Also, these particle size control methods are very expensive and require lots of different equipment and monitoring in order to function adequately.

This being the case, there exists a need for a method for coloring resinous materials, particularly thermoplastics and most particularly, thermoplastic polyurethane, which is reliable but also easily reproducible and relatively easy to accomplish. Accordingly, it would be desirable to have a process for adding compounding ingredients, especially for adding pigments and/or colorants to resinous materials that does not have the disadvantages mentioned above.

### SUMMARY OF THE INVENTION

In accordance with the present invention there is provided a method for imparting color to a resinous material, in particular, a method for preparing a colored resinous material using a wet grinding process such that prior particle size reduction of the colorant is not required. The present method is particularly adapted to use with thermoplastic materials such as thermoplastic polyurethane. The present method can optionally comprise converting an elastomer to a decreased size in a grinding apparatus using a size reduction operation and soaking the elastomer in an additive during the size reduction operation. The instant process can optionally include first decreasing the size of an elastomer in a grinding apparatus to form a fine particle having a particle size of -50 mesh or -80 mesh, and then introducing the fine particle into a process wherein the fine particle is mixed with additive such as an aromatic oil or ester at a predetermined stoichiometric ratio, and adding a sufficient amount of colorant thereto in order to produce a colored particle.

In accordance with the present invention, there is also provided a colored particle. The particle includes an elastomer which is in a mixture with a colorant, and in fact, forms a bond therebetween. This bond between the particle and the colorant is formed, for example, by virtue of the elastomer and the colorant having been coground together. The elastomer and colorant have preferably been predispersed in a solvent such as an aromatic oil or ester and then coground to a desired particle size.

In a preferred embodiment, the invention provides a method for imparting color to an elastomer, comprising cogrinding an elastomer and a sufficient amount of a colorant to produce a colored particle.

In another preferred embodiment, the invention provides a method for imparting color to an elastomer, comprising grinding said elastomer to form a ground elastomer; and mixing an additive and a sufficient amount of a colorant with said ground elastomer to produce a colored particle.

Preferably additive is added during said grinding of said elastomer and said colorant.

Preferably, one ore more plasticizers, oils, esters or solvents are added during said grinding of said elastomer and said colorant.

Preferably, one or more plasticizers, oils, esters or solvents are added during said grinding at a ratio of elastomer to said plasticizers, oils, esters or solvents from 90:10 to 10:90 based on weight.

Preferably, one or more plasticizers, oils, esters or solvents are added during said grinding at a ratio of elastomer to said plasticizers, oils, esters or solvents from 70:30 to 30:70 based on weight.

Preferably, one or more vulcanizing agents, vulcanization aides, activators, reinforcing agents, plasticizers, antioxidants or process oils are added during said grinding.

Preferably, the colorant is selected from the group consisting of iron oxides, lead oxides, strontium chromate, carbon black, coal dust, titanium dioxide, talc, barium sulfate, and color pigments.

Preferably, the grinding is conducted by a wet grinding process.

In another preferred embodiment, the invention provides a colored particle produced by the process of the instant invention.

In another preferred embodiment, the instant invention provides a colored particle comprising an elastomer and a colorant.

Additional objects, features and advantages of the invention will be set forth in the description which follows, and in part, will be obvious from the description, or may be learned by practice of the invention. The objects, features and advantages of the invention may be realized and obtained by means of the instrumentalities and combination particularly pointed out in the appended claims.

### DETAILED DESCRIPTION OF THE PREFERRED EMBODIMENT

Most colored particles contain an opacifier such as titanium dioxide to impart opacity, and one or more color concentrate, to impart color. Titanium dioxide, is rather expensive and must often be reduced in particle size in order for it to be effective as an opacifier. This is also true with respect to the raw materials generally employed as color pigments, dyes or colorants. Hence normally titanium dioxide (and/or other opacifiers) and color pigments are masterbatched in a binder and subjected to intensive mixing in order to reduce particle size. The dispersion of the color concentrate in the final composition also requires intensive mixing to disperse the color concentrate in the final mix. The finer the dispersion, the less of the color concentrate is required. Thermoplastic polyurethane (PU) is a material that can be subjected to particle size reduction in order to employ the same in the production of resinous articles, particularly those used in the automotive industry such as vehicle bumpers, mirror housings, etc. In order to reduce the particle size of resinous materials, it is advantageous in many cases to employ a process that permits the addition of one or more additives to produce desired end products. Certain processes that can be used are disclosed, for example, in commonly owned patent application serial no. 09/247,569, entitled "GROUND ELASTOMER AND METHOD," filed February 10, 1999.

The choice of appropriate additives can contribute to obtaining certain narrow particle size distributions, minimum amount of fines, etc. This can be done, by example, by selection of a suitable additive (which can in many cases be a partitioning agent) and the concentration of such. Pigmenting the elastomer can be done by masticating the elastomer with a color concentrate and pelletizing, then grinding the colored pellets. However, if a wet grinding process such as described in U.S. Patent No. 5,411,215 issued May 2, 1995 to Rouse for "TWO STAGE GRINDING," is employed to masticate the elastomer and colorant, this will eliminate the need to conduct the first mastication of the colorant as taught by the prior art.

A wet grinding process may refer to grinding mills interconnected to sequentially grind a rubber or polymer feedstock to a final fine grind state. A first grinding mill produces an intermediate feedstock of reduced size. The feedstock is rewet with water or other transport liquid to form a feed slurry which is then sequentially fed into a second mill. In a single pass through the first and second mill it has been discovered that the output is consistently a high yield of the desired final fine mesh output.

In a first example, a first grinding mill may be equipped with a 20 grit milling stone and fed with an input slurry averaging a 10 mesh feedstock consisting of 10% by weight of average ten mesh rubber particles in a water slurry. This mill is then set for an optimum flow rate. The resulting output is then re-liquified with water to form a uniform 10% by weight rubber content slurry, as required to replace water loss by flashover steam during the first stage grinding. This slurry is then split and fed into three mills using 24/36 grit stones.

It is determined by experiment that whereas only between 30 and 40% of the output from the first pass was of the desired minus 80 mesh rubber, that between 98 and 100% of the output of the first stage grinder was a minus 30 mesh rubber.

The feedstock comprising this, at least minus 30 mesh, rubber may be then, as stated above, fed to a plurality of grinders with the finer grit stones. Examination of the output of each second stage grinder showed that, in after a single pass, 100% of the rubber passed a minus 60 mesh and in general between 95 and 100% of the rubber achieved a minus 80 mesh in a single pass.

It is considered that even greater through put could be obtained by using 12 or 16 grit milling stones in the stage 1 mills and by using a larger mill such as a 14-24 inch diameter grinding stone mill as a first stage mill to feed a plurality of smaller mills utilizing the 24 to 36 grit stones.

In fact, by splitting the grinding stages, each mill can be optimized for throughput. It can be appreciated that using a coarser stone produces a coarser output ground polymer, but that a given stone will produce an output having all output particles below a certain size. In this way, it is possible to achieve substantially all particles below the chosen minus 80 mesh size in only two stages, with proper choice of grinding stones and mill setup.

In this process, the total quantity of produced minus 80 mesh rubber has significantly increased in the two pass process whereas, based upon the data for the stage one grinders, a converging series would indicate that at least three pass reduction of the material would be required to approximate a 90% reduction to an 80 mesh stage. This analysis is based on the necessity of separating out and recirculating the 60 to 70 percent of the particles which are not reduced to an 80 mesh in passage through the first stage. This necessity of filtering, screening and recirculating the particles also significantly adds to the complexity of slurry handling. In the two step process, by contrast, all the slurry output from the first stage may be directly input to the second stage requiring only the addition of water to bring it to the desired liquified properties.

It can thus be seen that the method as disclosed of two stage grinding significantly increases the through-put of the same number of machines over the current process of repeated single pass grinding, subsequent filtration, and re-grinding of the unreduced portion of the output.

It has also been determined that, inasmuch as the first stage grinders are optimized for a coarser output, the second stage grinders have a reduced power loading due to receiving a more uniform fine feedstock. As a result, the total power and amperage consumption of the grinders is less, for a given through-put, than if the four grinders were used for attempted single pass reduction as disclosed in the prior art.

The use of one or more suitable additives serves not only partition the elastomer as it is being ground, but also provides an environment in the aqueous environment of the wet grinding operation to bring the elastomer and the color concentrate close enough together to form a homogenous composition.

Most rubber compounds, and indeed, most elastomeric compounds, contain one or more plasticizers, oils, esters or solvents. Therefore, it may be necessary to add the plasticizer, oil ester or other solvent during the compounding process of the elastomer, rubber or plastic resin being produced. It is possible to pre-swell or predisperse the plasticizer, oil, ester or solvent in the elastomer at any suitable ratio and one of skill in the art would be capable of selecting appropriate ratios. The ratio of the components that are mixed in the preswelling/predispersing step is generally governed by at least two factors: first, the desired ratio of the two components in the final product that will be required for a downstream processing operation and second, by the solubility parameter of the two components, (i.e. how much oil, plasticizer, ester or solvent can be uptaken based on the saturation point of the particular material). In some embodiments the ratio of elastomer to solvent is from 90:10 to 10:90, more preferably 70:30 to 30:70 all based on weight.

In some embodiments, 5-10 parts per hundred by weight of aromatic oil can be dispersed in elastomeric compounds such as styrene butadiene rubber (SBR), natural rubber (NR), butadiene (BD), or blends of), 100-200 parts per hundred by weight of suitable oil(s) can be dispersed in ethylene propylene terpolymer rubber (EPDM) compositions. Alternatively, an ester type plasticizer can be dispersed in nitrile butadiene rubber (NBR) or polyvinyl chloride (PVC). It is desirable that an oil is selected that does not readily bloom out of the compound upon vulcanization, unless a point of saturation is reached.

Suitable solvents, softeners, plasticizers, and aromatic oils include polyisobutylene, a liquid isoprene rubber, a liquid butadiene rubber, paraffin oil, aromatic oil, naphthenic oil and other vegetable or mineral oils.

The amount of the softener or plasticizer is preferably at most 70 parts by weight, more preferably from 5 to 25 parts by weight, per 100 parts by weight of the total rubber content of the final product being made in the downstream operation such as in a tire rubber composition.

Suitable esters include di(2-ethylhexyl) adipate (also known as dioctyl adipate or DOA), DOS, DOD or plasticizers in PVC.

Soaking the elastomer, among other things, causes the elastomer to swell, removes oils from the elastomer and dissolves adhesives in the elastomer. According to an exemplary embodiment, a variety of water-soluble additives may be added to the soaking fluid. The additive, when used during soaking of the elastomer, decreases the swelling time of the elastomer as compared to elastomers soaked in the absence of the additive. According to an alternative embodiment, the additive may be a chemical that swells the rubber, but is not a tackifier, such as tetrahydrofuran (THF) or dimethyl formamide (DMF). According to other alternative embodiments, a variety of additives (as described below) may be used when soaking the elastomer. According to a preferred embodiment the additive used when soaking the elastomer is a fatty amine, such as DELAMIN" commercially available from Hercules, Inc.

According to a preferred embodiment, the additive is an aromatic oil or an ester, which may optionally contain a surfactant.

Other compounding agents include those commonly used in the resin industry can also be added into the mixture, or can be predispersed in a solvent such as an aromatic oil, plasticizer, ester or the like. For example, vulcanizing agents such as sulfur and peroxides; vulcanization accelerators such as thiazole, thiuram, sulfenamide and guanidine types; vulcanization aides such as stearic acid and zinc white; activators such as diethylene glycol and polyethylene glycol; reinforcing agents, such as various grades of carbon black such as FEF, HAF, ISAF and SAF, and calcium carbonate; fillers such as thermal black, acetylene black, graphite, clay and talc; and plasticizers, antioxidants and process oils. Additional compounding agents may be suitably selected from among these various compounding agents according to the purposes and applications of the resulting elastomeric compositions. The components to be predispersed together can be kneaded together by means of a mixer such as a roll or Banbury.

Pre-swelling and/or predispersing of vulcanized rubber (or other particulate material) with a suitable additive such as a plasticizer or oil can be done in one of several ways. For example, an elastomer can be mixed with a suitable plasticizer, oil, ester or solvent in a high-speed mixer such as a Henshel or any high-speed mixer known to those familiar with the art. This predispersing can be done at the time the rubber particle is ground into its desired size of less than -50 mesh or less than -80 mesh. That is, the plasticizer/aromatic oil can be added during formation of the ground fine particle, i.e., during a grinding operation as disclosed, for example, in U.S. Patent Nos. 5,411,215 and/or 5,238,194. Alternatively, the elastomer (in some embodiments preferably thermoplastic polyurethane) can be ground in the presence of solubilized or dispersed plasticizer/oil in water, wherein the solublizing or dispersing of plasticizer/oil is by the use of an appropriate additive which can be used in addition to the oil/plasticizer or in lieu thereof. The grinding process forces the transfer of the plasticizer/oil from the water to the vulcanized rubber. In this case, it would be advantageous to ensure complete transfer of the oil from the water to the elastomer, so no residual oil is left in the water. Suitable additives are disclosed, for example, in U.S. Patent Application Serial No. 09/247,569 filed February 10, 1999. Such suitable additives include a water miscible dispersing agent for carbon black, such as DAXAD3 commercially available from R.T. Vanderbilt Company, Incorporated of Norwalk, Connecticut. According to a particularly preferred embodiment about 25% DAXAD3 is added to an elastomer slurry of 15% to 60% solids. According to an alternative embodiment, the additive is a surfactant, such as TRITON-X™ commercially available from Rohm & Haas Company. According to a particularly preferred embodiment, the additive is added to the slurry in the amount of about 1% to 20% based on the amount of elastomer in the slurry, and about 10% to 15% by total weight of the elastomer in the slurry.

The additive provides a higher yield at the first pass of grinding of the slurry as compared to a slurry in which the additive is absent. Use of the additive produces a higher quantity (i.e., more uniformly fine ground and having less shear) particle as compared to a the particles produced from a slurry in which the additive is absent. A slurry having an additive yields a significant increase in throughput of ground particles of the desired smaller size, and a smaller percentage of particles passed through the mill without adequate reduction in size. This alone is beneficial, as the economic losses occasioned by the necessity of screening out insufficiently reduced particles and re-grinding them can be reduced. Further, use of the additive provides decreased grinding times of the slurry as compared to a slurry in which the additive is absent. Decreased grinding times may reduce wear and damage to the wheels of the grinding apparatus. The additives provide a lower temperature to the slurry as compared to a slurry in which the additive is absent. A slurry in which the additive is absent reaches a temperature of about 400° to 450° Fahrenheit, whereas the slurry having the additive reaches a temperature of about 300° Fahrenheit. Decreased temperature of the slurry is beneficial, in part, because high temperatures may destroy some polymers, less insulation is required in the grinding apparatus, heat damage to the grinding apparatus is decreased and the temperature of the grinding operation is better controlled to achieve the desired viscoelastic effects in milling the elastomer.

The additives chemically react with the elastomer to produce a more desirable elastomer particle. The glass transition temperature (Tg) of the elastomer-additive product is reduced as compared to elastomer particle product in which the additive is absent. A lower Tg value is beneficial in producing downstream materials from the elastomer-additive product because a lower temperature is required for the elastomer additive product to change from a brittle state to a plastic state, which reduces energy costs. Further, the additives chemically react with the elastomer to produce a more tacky elastomer-additive particle product as compared to the elastomer particle product in which the additive is absent. The additive can be added in any desired amount. Preferably the additive is added in an amount from 0.5% to 95%, more preferably from 5% to 40% advantageously from 5% to 20% but in a preferred embodiment is added in an amount of about 10% or 10%, in each case being based on the total weight of the elastomer.

According to another alternative, the elastomer (or other particulate material or component) can be ground in the presence of another resin or a neutralized solution of a resin, such as rosin acid, dimer of rosin acid or polymerized rosin acid, either wood or tall oil rosin, since adding rosin acid to a toluene solution of a vulcanizable compound, gelled due to premature vulcanization, reduced the solution viscosity significantly. Suitable additional neutralizing agents are disclosed, for example, in U.S. Patent Application Serial No. 09/247,569.

According to one embodiment, the additive is a resin (natural or synthetic). According to other alternative embodiments, the additive is a rosin (i.e., a mixture of monocarboxylic acids having a hydrophenanthrene nucleus) such as gum rosin or wood rosin. Rosins are of particular interest because they tend to act as dispersing agents in the elastomer slurry and affect the tackiness of the elastomer-additive product. According to a preferred embodiment of the present invention, the rosin is tall oil rosin (i.e., a by-product of the paper manufacturing process). According to a particularly preferred embodiment, the tall oil rosin has a low acid number, such as XP56 commercially available from Arizona Chemical Company. According to an alternative embodiment, the additive is a resin acid (i.e., abietic-type acids that contain an isopropyl group pendent from carbon 13 as numbered using the Chemical Abstracts system, or pimaric-type acids that include a methyl and vinyl group pendent from the same carbon atom). According to other alternative embodiments, the resin acid is abietic acid or rosin soap (i.e., rosin leached with sodium hydroxide). The rosin is made water-soluble by neutralizing the rosin with a suitable base, such as ammonia, ammonium hydroxide, an amine (i.e., a Frisch amine). Other additives of interest include any rosin acid, polymerized rosin acid, esters of rosin acid, dispersions of rosin acid, dispersions of esters of rosin acid, copolymers of rosin acid, disproportionated rosin acid, hydrogenated rosin acid, 9-anthracene carboxylic acid, 2-ethylhexanoic acid, acetal R-type acids, or any organic acid that could be soluble in water by neutralizing the acid. According to an alternative embodiment, the additive is oleic acid (i.e., derived from animal tallow or vegetable oils). Oleic acid may not substantially modify the tackiness of the elastomer-additive product. According to an alternative embodiment, the additive is an oligomer (i.e., a low molecular weight polymer molecule consisting of only a few monomer units (e.g., dimer, trimer, tetramer)). According to a preferred embodiment, the oligomer has a viscosity of about 100,000 CP and tends to act as a dispersing agent in the elastomer slurry. The oligomer can include short chain copolymers of styrene and maleic anhydride that offer typical anhydride functionality in a polymeric material such as SMA3 resin commercially available from Sinclair Petrochemicals, Incorporated. According to a preferred embodiment, the oligomer is ethylene-maleic anhydride copolymers such as EMA3 resin commercially available from Monsanto Industrial Chemical Co.

A filler may optionally be added to the slurry. The filler may be added to the slurry (i.e., elastomer slurry or elastomer-additive slurry) to combine with the slurry to form an elastomer-additive product or an elastomer product having reinforcing properties, temperature modifying properties, increased high surface area, and/or increased tensile strength. A filler (e.g., nylon) combines with the final elastomer product to give the final product reinforcing properties, temperature modifying properties, increased high surface area, and/or increased tensile strength. According to a particularly preferred embodiment of the present invention, the filler is a nylon material.

Any high molecular weight thermoplastic resin having an average molecular weight of 5000-1,000,000 may be particularly suitable in some embodiments, although any known elastomer that is capable of being sized reduced by the instant process would work. Some suitable high molecular weight thermoplastic resins include those selected from the group consisting of polyethylene, polypropylene, poly-butene-1, 1,2-polybutadiene, polystyrene, polymethyl styrene, polyvinyl chloride, polymethyl methacrylate, polyamide resin, polyester resin, thermoplastic polyurethane, ethylene-propylene block copolymer, ethylene-vinylacetate copolymer, ethylene-ethylacrylate copolymer, styrene-butadiene block copolymer and styrene-isoprene copolymer.

Any colorant, dye or pigment can be used to color the elastomer as typically known to those of skill in the art and may be any of the conventional types comprising, for example, iron oxides, lead oxides, strontium chromate, carbon black, coal dust, titanium dioxide, talc, barium sulfate, as well as color pigments such as cadmium yellow, cadmium red, chromium yellow and metallic pigments such as aluminum flake. Other colorants, dyes (organic or inorganic) can be used if desired for any reason.

The pigment content is usually expressed as a pigment-to-resin weight ratio. In the practice of the present invention, the pigment-to-resin weight ratios are as high as 2:1 and, for some embodiments are within the range of about 0.05 to 1:1, based on the weight of the elastomer.

Suitable materials within the scope of the present invention along with their acronym designations are listed below:

| | |
|---|---|
| ACM | polyacrylate |
| ACN | acrylonitrile |
| AU | urethane (ester) |
| BDO | 1,4-butanediol |
| BIIR | bromobutyl rubber |
| BR | polybutadiene rubber |
| CBS | N-cyclohexyl-2-benzothiazolesulfenamide |
| CIIR | chlorobutyl rubber |
| CO | epichlorohydrin homopolymer |
| CR | poly(chloroprene) rubber |
| CSM | chlorosulfonated polyethylene, i.e. Hypalon |
| DCBS | N,N-dicyclohexyl-2-benzothiazyl sulfenamide |
| DOP | dioctyl phthalate |
| DPG | diphenyl guanidine |
| DTDM | dithiodimorpholine |
| EAM | ethylene vinyl acetate |
| ECO | epichlorohydrin copolymer |
| EPDM | ethylene propylene terpolymer rubber |
| EPM | ethylene propylene copolymer rubber |
| EU | urethane (ether) |
| EVM | ethylene vinyl acetate |
| FFKM | perfluoromethyl vinyl ether and tetrafluoroethylene copolymer |
| FKM | fluoroelastomer, i.e., Viton |
| GECO | epichlorohydrin terpolymer |
| GR-S | Government rubber styrene |
| HNBR | hydrogenated nitrile |
| HPPD | N-(1,3-dimethylphenyl)-N'-phenyl-*p*-phenylenediamine |
| HQEE | hydroquinone bis-(2-hydroxyethyl) ether |
| HSN | hydrogenated nitrile |
| IIR | butyl rubber, isobutylene isoprene rubber |
| IR | polyisoprene |
| MBS | 2-(morpholinothio) benzothiazolesulfenamide |
| MBT | mercaptobenzothiazole |
| MCBA | 4,4'-ethylene-bis-(2-chloroaniline) |
| MDI | methylene diisocyanate |
| MEK | methyl ethyl ketone |
| NBR | nitrile butadiene rubber |
| NR | natural rubber |
| PCLG | polycaprolactone glycol |
| PEAG | polyethylene adipate glycol |
| PEG | polypropylene ether glycol |
| PTMEG | polytetramethylene ether glycol |
| PVC | polyvinyl chloride |
| Q | silicone elastomers |
| SBR | styrene butadiene rubber |
| SIBR | styrene-isoprene-butadiene rubber |
| SSBR | styrene butadiene rubber (solution) |
| TDI | toluene diisocyanate |
| TEA | triethanolamine |
| TFE/P | tetrafluoroethylene propylene copolymer |
| TIPA | triisopropanolamine |
| TMP | trimethylol propane |
| TMTD | tetramethyl thiuram disulfide |
| TMTM | tetramethyl thiuram monosulfide |
| TPE | thermoplastic elastomer |
| ZDBC | zinc dibutyl dithiocarbamate |

It is important to note that the use of the term "production of elastomer particles" is not meant as a term of limitation, insofar as any product which may incorporate the elastomer product is intended to be within the scope of the term. For example, the elastomeric product may be incorporated into or useful in the production of air blown asphalt; paving asphalt, roofing asphalt (e.g., shingles, roof roofing, undergarments, various membranes, etc.), paving cement (i.e., portland cement), the manufacture of any rubber article (e.g., tires, carpet backings, shoe soles, plastic garbage containers, etc.), thermoplastic elastomers, automotive goods (i.e., underbody coatings, bumpers, housings, dashboards, cup holders, etc.), insulation, etc.

Although only a few exemplary embodiments of the present invention have been described in detail in this disclosure, those skilled in the art who review this disclosure will readily appreciate that many modifications are possible in the exemplary embodiments (such as variations in sizes, structures, shapes and proportions of the various elements, values of parameters, or use of materials) without materially departing from the novel teachings and advantages of the invention. Accordingly, all such modifications are intended to be included within the scope of the invention as defined in the appended claims. Other substitutions, modifications, changes and omissions may be made in the design, operating conditions and arrangement of the preferred embodiments without departing from the spirit of the invention as expressed in the appended claims.

Additional advantages, features and modifications will readily occur to those skilled in the art. Therefore, the invention in its broader aspects is not limited to the specific details, and representative devices, shown and described herein. Accordingly, various modifications may be made without departing from the spirit or scope of the general inventive concept as defined bye the appended claims and their equivalents.

As used herein and in the following claims, articles such as "the", "a" and "an" can connote the singular or plural.

## Claims

1. A method for imparting color to an elastomer, comprising cogrinding an elastomer and a sufficient amount of a colorant to produce a colored particle.

2. The method of claim 1, further comprising adding an additive during said grinding of said elastomer and said colorant.

3. The method of claim 1, further comprising adding one or more plasticizers, oils, esters or solvents during said grinding of said elastomer and said colorant.

4. The method of claim 1, further comprising adding one or more plasticizers, oils, esters or solvents during said grinding at a ratio of elastomer to said plasticizers, oils, esters or solvents from 90:10 to 10:90 based on weight.

5. The method of claim 1, further comprising adding one or more plasticizers, oils, esters or solvents during said grinding at a ratio of elastomer to said plasticizers, oils, esters or solvents from 70:30 to 30:70 based on weight.

6. The method of claim 1, further comprising adding one or more vulcanizing agents, vulcanization aides, activators, reinforcing agents, plasticizers, antioxidants or process oils during said grinding.

7. The method of claim 1, wherein the colorant is selected from the group consisting of iron oxides, lead oxides, strontium chromate, carbon black, coal dust, titanium dioxide, talc, barium sulfate, and color pigments.

8. The method of claim 1, wherein said grinding is conducted by a wet grinding process.

9. A colored particle produced by the process of claim 1.

10. A method for imparting color to an elastomer, comprising grinding said elastomer to form a ground elastomer; and mixing an additive and a sufficient amount of a colorant with said ground elastomer to produce a colored particle.

11. The method of claim 10, further comprising adding one or more plasticizers, oils, esters or solvents during said grinding.

12. The method of claim 10, further comprising adding one or more plasticizers, oils, esters or solvents during said grinding at a ratio of elastomer to said plasticizers, oils, esters or solvents from 90:10 to 10:90 based on weight.

13. The method of claim 10, further comprising adding one or more plasticizers, oils, esters or solvents during said grinding at a ratio of elastomer to said plasticizers, oils, esters or solvents from 70:30 to 30:70 based on weight.

14. The method of claim 10, further comprising adding one or more vulcanizing agents, vulcanization aides, activators, reinforcing agents, plasticizers, antioxidants or process oils during said grinding.

15. The method of claim 10, wherein the colorant is selected from the group consisting of iron oxides, lead oxides, strontium chromate, carbon black, coal dust, titanium dioxide, talc, barium sulfate, and color pigments.

16. The method of claim 10, wherein said grinding is conducted by a wet grinding process.

17. The method of claim 10, wherein said mixing is conducted by a wet grinding process.

18. The method of claim 10, further comprising adding one or more plasticizers, oils, esters or solvents during said mixing.

19. A colored particle produced by the process of claim 10.

20. A colored particle comprising an elastomer and a colorant.
